Europäisches Patentamt

European Patent Office

Office européen des brevets

(19)

(11) Veröffentlichungsnummer: **0 110 156**
**A1**

(12) **EUROPÄISCHE PATENTANMELDUNG**

(21) Anmeldenummer: **83110804.8**

(22) Anmeldetag: **28.10.83**

(51) Int. Cl.³: **E 04 F 21/00**

(30) Priorität: **23.11.82 DE 3243214**

(43) Veröffentlichungstag der Anmeldung: **13.06.84**
**Patentblatt 84/24**

(84) Benannte Vertragsstaaten: **AT BE CH FR GB IT LI NL SE**

(71) Anmelder: **P r e h Industrieausrüstungen GmbH, Postfach 1740 Schweinfurter Strasse 5, D-8740 Bad Neustadt/Saale (DE)**

(72) Erfinder: **Fick, Horst, Antoniusstrasse 14, D-8741 Oberstreu (DE)**
Erfinder: **Brosch, Horst, Haus Nr. 15 1/2, D-8741 Bastheim/Braidbach (DE)**
Erfinder: **Hahn, Günter, Ing.-grad., Rhönstrasse 99, D-8740 Bad Neustadt/S. (DE)**

(54) **Einrichtung zum automatischen Einziehen eines Dichtungsstreifens in eine Nut eines Rahmens.**

(57) Es wird eine Einrichtung zum automatischen Einziehen eines Dichtungsstreifens in eine Nut eines Rahmens, z.B. eines Fensterrahmens, beschrieben. Bislang wurden die Dichtungsstreifen in Handarbeit in die Nuten eingezogen. Mit der vorliegenden Erfindung wird eine Lösung vorgeschlagen, die ein automatisches Einziehen gestattet. Hierzu ist eine mit dem Dichtungsstreifen bewickelte Vorratsrolle (5) vorgesehen, von der der Dichtungsstreifen (7) über eine Transporteinrichtung (19) zur Nut geführt wird. Es ist ferner eine Schneideinrichtung (28) vorhanden, die die Dichtungsstreifen automatisch in Stücke mit der gewünschten Länge schneidet. Eine Eindrückeinrichtung (22) drückt den Dichtungsstreifen in die Nut. Mit einem Förderantrieb (6) wird der Fensterrahmen relativ zu der Eindrückeinrichtung transportiert.

0110156

P r e h
Industrieausrüstungen GmbH
Schweinfurter Straße 5
8740 Bad Neustadt/Saale

, den 10.11.1982

Bsch/Hi
16/82 Pt. +Hgm

### Einrichtung zum automatischen Einziehen eines Dichtungsstreifens in eine Nut eines Rahmens

Die Erfindung geht von einer Einrichtung nach dem Oberbegriff des Anspruches 1 aus.

In Nuten eingezogene Dichtungsstreifen werden insbesondere in Fenstern oder Türen, sowohl im Rahmen wie auch in den Flügeln, benötigt. Es ist von untergeordneter Bedeutung, aus welchem Material die Fenster oder Türen hergestellt und wofür sie bestimmt sind. Sie können aus Kunststoff, aus Metall oder aus Holz bestehen. Üblicherweise werden die zuvor genau auf die gewünschte Länge zugeschnittenen Dichtungsstreifen, die die unterschiedlichsten Profile aufweisen können, von Hand in die Nuten eingedrückt oder sie werden von einer Rolle gezogen in die Nut eingedrückt und am Anfang und Ende der Nut in einem 45-Grad-Winkel abgeschnitten. Da die Dichtungsstreifen, um ihre Funktion zu erfüllen, flexibel sein müssen, werden sie meist aus Gummi oder einem ähnlichen Material hergestellt.

Aufgabe der vorliegenden Erfindung ist es, eine Einrichtung nach der eingangs genannten Art zu schaffen, bei der das Einziehen des Dichtungsstreifens in eine Nut ohne Handarbeit durchgeführt wird.

Diese Aufgabe wird erfindungsgemäß durch die im Kennzeichnungsteil des Anspruches 1 angegebenen Merkmale gelöst.

Vorteilhafte Ausgestaltungen ergeben sich aus den Unteransprüchen.

Die Verwendung einer Einrichtung gemäß dem Kennzeichnungsteil des Anspruches 1 hat den Vorteil, daß der Dichtungsstreifen schneller und damit kostengünstiger eingezogen werden kann. Da auch das Abschneiden für die Ecken eines z.B. viereckigen Rahmens automatisch erfolgt, bedarf es lediglich einer Aufsichtsperson, die mehrere Einrichtungen gleichzeitig bedienen kann. Das Drehen und das Heranbringen des Rahmens erfolgt in einer anderen Station ebenfalls automatisch.

0110156

Die Erfindung wird nachfolgend für ein Ausführungsbeispiel anhand der Zeichnungen näher erläutert.

Von den Figuren zeigt

Figur 1  in perspektivischer Darstellung eine Einrichtung in Seitenansicht zum automatischen Einziehen eines Dichtungsstreifens in eine Nut,

Figur 2  die Einrichtung in perspektivischer Darstellung in einer weiteren Seitenansicht,

Figur 3  eine perspektivische Ansicht der Transport-, Schneid- und Eindrückeinrichtung mit zugeordnetem Antrieb in schematischer Darstellung in Seitenansicht,

Figur 4  eine perspektivische Darstellung der Halteeinrichtung für den Rahmen,

Figur 5  ein Schaltbild einer pneumatischen Steuerung für die Einzieh-Einrichtung,

Figur 6  ein Funktions- und Zeitdiagramm für die Steuerung der einzelnen Zylinder und Motoren.

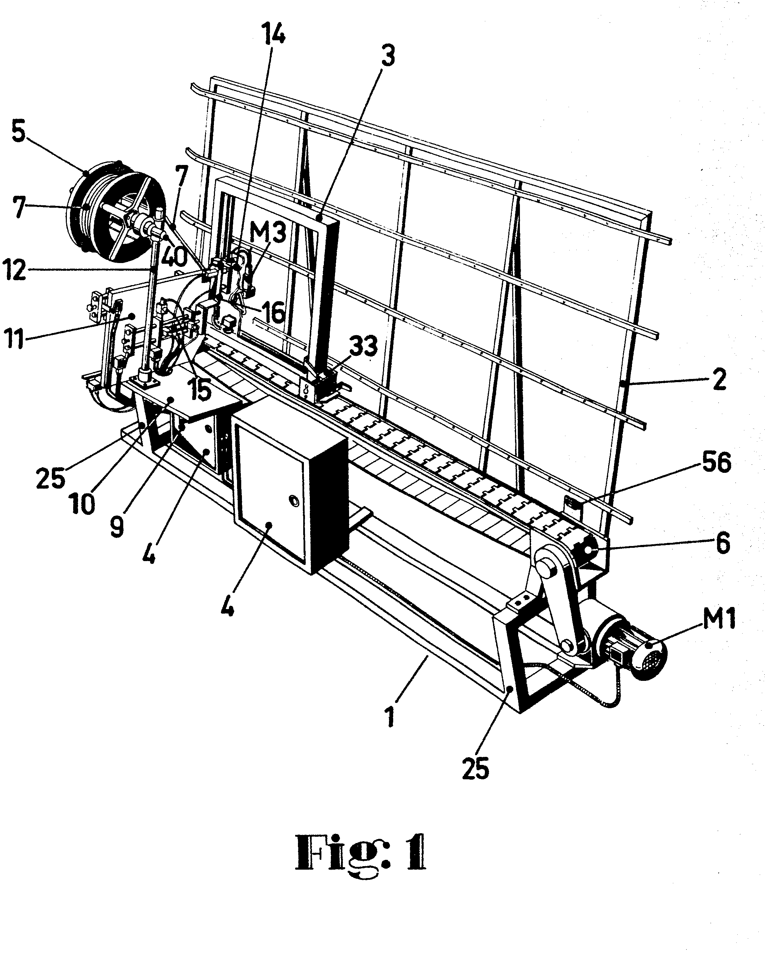

Die in Figur 1 in perspektivischer Darstellung gezeigte Einzieheinrichtung wird von einer länglichen Gestellbaugruppe 1 gebildet, die aus einem Gestellbaugruppenunterteil 25 und einem Gestellbaugruppenrahmen 2 besteht. Mit dem Unterteil steht die Einrichtung am Boden oder wird am Boden befestigt. Am Unterteil sind im wesentlichen ein Förderbandantrieb (M1, 6), ein Schaltschrank 4, der die Steuerungselektronik enthält, ein Tisch 10 und natürlich der Gestellbaugruppenrahmen befestigt.

Der Förderbandantrieb besteht aus einem an der Stirnseite des Unterteils rechts oder links angebrachten Motor M1, der über ein in Figur 1 nicht sichtbares Getriebe ein umlaufendes endloses Band 6 antreibt. Mit Hilfe dieses Bandes 6 wird ein Fensterflügel oder Fensterrahmen 3 bzw. Türflügel oder Türrahmen entlang dem Band in die Arbeitsstellung bewegt.

Es sind mehrere Gestellbaugruppen nebeneinander angeordnet, wobei in jeder Gestellbaugruppe eine andere Arbeit verrichtet wird. So können z.B. in einer Gestellbaugruppe Ausnehmungen gebohrt oder gefräst werden, in die Beschläge eingedrückt werden, oder es ist eine Gestellbaugruppe vorhanden, in der der Fensterrahmen 3, der hier beispielsweise als zu bearbeitendes Teil gewählt wurde, um 90 Grad gewendet wird. Die letztgenannte Gestellbaugruppe ist wichtig, da sowohl bei den Bohr- und Fräsarbeiten als auch bei den Einzieharbeiten für den Dichtungsstreifen der Fensterrahmen öfters gedreht werden muß. Die Drehung erfolgt deshalb, weil meist an zwei oder mehr Ecken Beschläge und dgl. angebracht werden müssen bzw. gar an vier Seiten die Dichtungsstreifen eingesetzt werden müssen. Der Förderbandantrieb jeder Gestellbaugruppe ist so ausgelegt, daß der Fensterrahmen leicht von einer zur anderen Gestellbaugruppe transportiert werden kann.

Damit der Fensterrahmen 3 nicht vom Band 6 des Förderantriebes herunterfallen kann, erfolgt der Transport in der Schräglage auch im Hinblick auf die Beförderung von einer Gestellbaugruppe zur anderen. Hierzu ist an dem Gestellbaugruppenunterteil 25 in Schräglage ein Gestellbaugruppenrahmen 2 befestigt, der aus einem Gitterrahmen von mehreren horizontal und vertikal angeordneten Stäben besteht. Da der Fensterrahmen 3 durch die Schräglage an diesen Stäben entlang bewegt wird, sind zur Vermeidung der entstehenden Reibung und eventuell entstehender unschöner Kratzer, in den Figuren nicht dargestellte, in den Stäben sich rollende Walzen oder Kugeln gelagert.

Wie bereits erwähnt, ist an dem Gestellbaugruppenunterteil ein Tisch 10 befestigt. Da auf diesem Tisch bzw. an ihm befestigt Teile mit einem großen Gewicht angeordnet sind, ist der Tisch 10 selbst über seitliche Ausleger 9 mit dem Gestellbaugruppenunterteil verbunden, wobei die Ausleger den Tisch von unten her abstützen. Auf der Oberseite des Tisches ist, wie in Figur 1 veranschaulicht ist, ein Ständer 12 in Form eines Rohres vorgesehen, der an seinem oberen freien Ende eine in einem Drehlager gelagerte, quer zum Ständer angeordnete Drehwelle 40 trägt. An der Drehwelle befestigt ist eine drehbare Vorratsrolle 5, auf der ein Dichtungsstreifen 7 aufgewickelt ist. Der Dichtungsstreifen kann ein beliebiges Profil besitzen und er besteht aus einem flexiblen Material, wie z.B.

BAD ORIGINAL

0110156

Gummi oder dgl.. Wegen des Gewichtes und der Schwingungsprobleme beim Start und Stopp kann die Vorratsrolle auch mit Hilfe eines Ständers direkt am Boden stehen.

An dem Tisch 10 ist senkrecht zu ihm eine Halteplatte 11 mittels Schrauben befestigt. An die Halteplatte 11 angebaut sind eine erste und eine zweite Vorschubeinheit, wobei sich die Vorschubeinheiten auf verschiedenen Seiten der Halteplatte 11 befinden. Die Funktion und das Zusammenspiel der einzelnen Einheiten miteinander werden später noch genauer erläutert werden.

Die erste Vorschubeinheit besteht aus einem pneumatischen Zylinderkolben 13 (Zylinderkolbeneinheit B), dessen Kolbenstange am vorderen Ende eine Trägerplatte 14 trägt. Da die vor und zurück zu bewegende Trägerplatte mit den an ihr befestigten Bauteilen ein nicht unwesentliches Gewicht besitzt, sind parallel zu der Kolbenstange noch zwei Führungsstangen 41 vorgesehen.

Der von der Vorratsrolle abgewickelte Dichtungsstreifen 7 ist in einem Führungskanal 17 geführt, der sich an der Trägerplatte befindet. Zum leichteren Einbringen des Dichtungsstreifens in den Führungskanal 17 besitzt dieser am Anfang einen Einlauf 18 in Form von Anschrägungen. Damit der Dichtungsstreifen überhaupt weiterbewegt wird, sind zwei gegensinnig rotierende Vorschubrollen 19 an der Trägerplatte drehbar befestigt. Umfangseitig sind diese Vorschubrollen 19 mit je einem Zahnkranz versehen, der sich in den Dichtungsstreifen leicht eindrückt und so eine Mitnahme bewirkt. Der Abstand der beiden Vorschubrollen 19 zueinander ist so gewählt, daß der zwischen den beiden durchgeführte Dichtungsstreifen im strammen Sitz mitführend bewegt wird.

Die Bewegung des Fensterrahmens 3 durch das umlaufende Band 6 erfolgt parallel zum Tisch 10. Der Dichtungsstreifen kann entweder senkrecht oder auch waagerecht zum Tisch und im Fall der senkrechten Anordnung nach unten oder oben transportiert werden. Die senkrechte Anordnung macht erforderlich, daß der Dichtungsstreifen von der vertikalen Führung in die horizontale Lage geeignet zum Eindrücken in die Nut 8 des Fensterrahmens 3 überführt wird. Hierzu sind an der Halteplatte befestigte

0110156

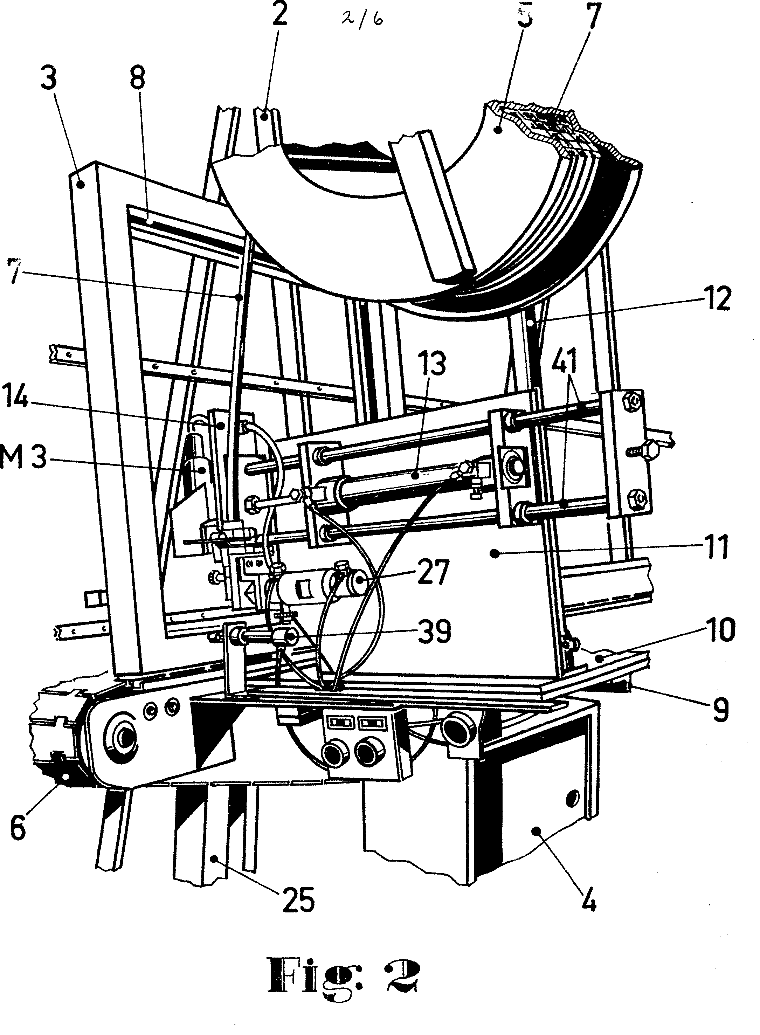

Umlenkmittel vorgesehen. Für die Gestaltung der Umlenkmittel gibt es mehrere Möglichkeiten. Zwei sollen nachfolgend kurz beschrieben werden. Eine dieser Möglichkeiten ist in Figur 2 veranschaulicht.

Bei einer Ausführungsform der Umlenkmittel bestehen diese aus mehreren in einem gewissen Abstand parallel und bogenförmig dicht aneinander angeordneten Führungsrollen. Kommt der Dichtungsstreifen von oben an, so wird er in den Raum zwischen den Führungsrollen eingeführt und durch die bogenförmige Anordnung rechtwinkelig abgebogen. Der Radius der bogenförmigen Anordnung sollte so groß gewählt sein, daß kein Verkanten des Dichtungsstreifens erfolgt.

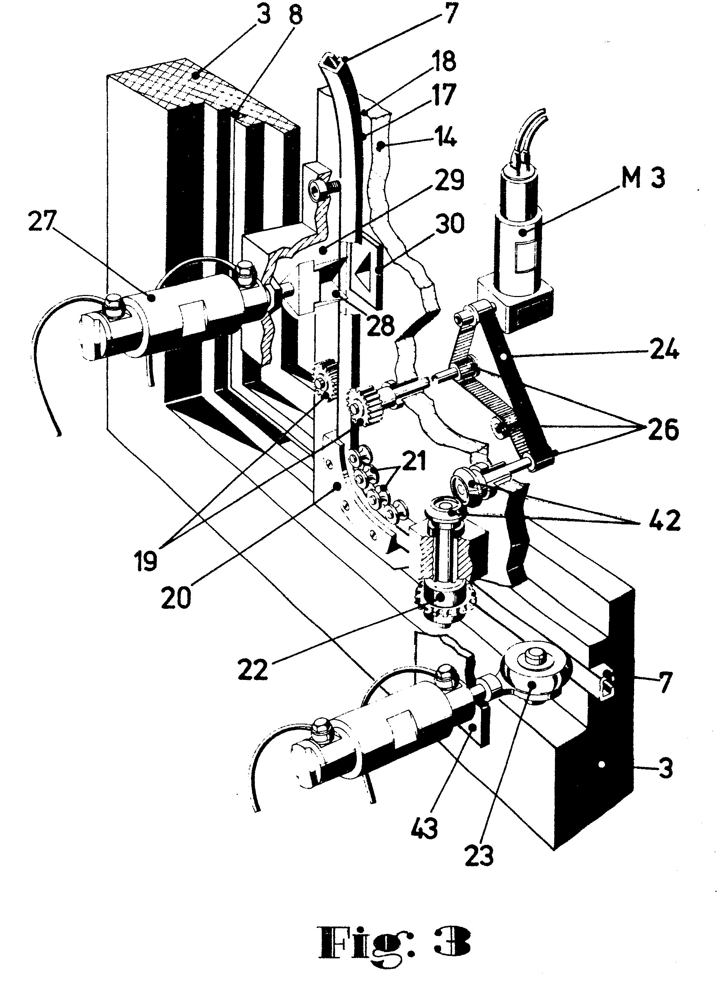

Bei der in Figur 3 dargestellten Ausführungsform der Umlenkmittel sind ebenfalls Führungsrollen 21 vorgesehen, jedoch ist nur eine bogenförmig angeordnete Reihe vorhanden. Die beabstandete parallele Führung erfolgt durch einen bezogen auf die Ebene der Trägerplatte 11 erhabenen, bogenförmigen Leistenvorsprung 20 mit einem überstehenden Vorsprung, so daß der Dichtungsstreifen sicher geführt und umgelenkt wird.

Der aus den Umlenkmitteln herauskommende Dichtungsstreifen wird von dem am Umfang vorhandenen Zahnkranz einer Walze 22 erfaßt und in die langgestreckte Nut 8 eingedrückt. Hierbei muß er in der horizontalen Lage parallel zur Ebene des Tisches abgelenkt werden. Dies geschieht dadurch, daß die Drehachse der Walze etwas vor der Ebene der Trägerplatte steht. Dadurch, daß der Abstand des sich vorschiebenden Dichtungsstreifens zur Trägerplatte größer ist als der Abstand Drehachse/Trägerplatte, stößt der Dichtungsstreifen exzentrisch auf die Walze, so daß die Walze den Dichtungsstreifen ablenkt und die Zähne des Zahnkranzes drücken den Dichtungsstreifen in die langgestreckte Nut 8.

Wie aus Figur 3 zu entnehmen ist, ist für die Vorschubrolle 19 und die Walze 22 ein gemeinsamer Antrieb vorgesehen. Dieser besteht aus einem Motor M3, der über einen Zahnriemen 24 als Zugmittel eine Reihe von Wellen, Umlenkrollen und Zahnrädern direkt oder indirekt antreibt, die ihrerseits die Vorschubrollen und die Walze drehen. So sind z.B. für den Antrieb der Walze zwei Kegelräder 42 vorgesehen, deren Drehachse senkrecht zueinander stehen.

Der Dichtungsstreifen soll, wie in dem Ausführungsbeispiel ausgewählt, in einen viereckigen Fensterrahmen eingezogen werden und zwar an den vier Seiten. Dies besagt, daß jeder der vier Dichtungsstreifen am Anfang und am Ende in einem Winkel von 45° abgeschnitten sein muß, damit in den Ecken die Enden in den Nuten übergangslos aufeinanderstoßen können. Hierzu ist eine besondere Schneideinrichtung an der Trägerplatte vorgesehen. Diese besteht aus einer pneumatisch angetriebenen Zylinderkolbeneinheit 27 (Zylinderkolbeneinheit D), mit deren Kolbenstange ein Schneidmesser 28 bewegt werden kann. Das Schneidmesser ist in einem an der Trägerplatte 14 befestigten Führungsblock 29 geführt. Gegenüber der Schneide des Schneidmessers 28 befindet sich eine Schneidplatte 30, die in die Trägerplatte eingesetzt ist und die aus einem weichen Material besteht. Das Schneidmesser selbst ist V-förmig ausgebildet. Wird der Dichtungsstreifen zu Beginn der Vorratsrolle in den Führungskanal eingesteckt, so erfolgt durch Handauslösung ein Schnitt, wobei der Anfang unter einem Winkel von 45° abgeschnitten wird. Am Ende des Dichtungsstreifens erfolgt dann automatisch ein erneuter Schnitt, jedoch so, daß gleichzeitig das auslaufende Stück im richtigen Winkel und das neue Stück ebenfalls im richtigen Winkel zugeschnitten wird. Der Zeitpunkt dieses Schnittes ist natürlich so gewählt, daß der noch nicht in die Nut eingedrückte Dichtungsstreifen bezüglich seiner Länge genau in die restliche vorgegebene Nut paßt.

Solange der Dichtungsstreifen in die Nut eingeführt wird, ist die Kolbenstange der Zylinderkolbeneinheit B nach vorne geschoben. Kurz vor dem Ende des Dichtungsstreifens fährt die Kolbenstange zurück und die zweite Vorschubeinheit wird aktiviert. Diese zweite Vorschubeinheit besteht aus einer pneumatisch angetriebenen Zylinderkolbeneinheit 15 (Zylinderkolbeneinheit C), an deren Kolbenstange ein Bügel 16 befestigt ist. Der Bügel erstreckt sich senkrecht zur Verschieberichtung der Kolbenstange und an seinem oberen freien Ende ist ein Endschalter E6 angeordnet, der veranlaßt, daß die Kolbenstange der ersten Vorschubeinheit zeitlich versetzt zurückfährt und die Kolbenstange der zweiten Vorschubeinheit nach vorne fährt. An dem Ende des Bügels, an dem dieser an der Kolbenstange befestigt ist, ist ein Bügelfortsatz 43 vorgesehen, an dessem freien Ende sich eine vorstehende Scheibe 23 drehbar befindet. Diese Scheibe liegt genau auf der Höhe der Nut und mit ihrer Hilfe wird der letzte Teil des auslaufenden Dichtungsstreifens in die Nut eingedrückt.

Aus verständlichen Gründen ist es erforderlich, daß der Fensterrahmen 3 ohne Schlupf von dem Band 6 insbesondere während des Einziehens des Dichtungsstreifen bewegt wird. Um dies zu erreichen, ist der Fensterrahmen durch eine Halteeinrichtung mit dem Band schlupffrei verbunden.

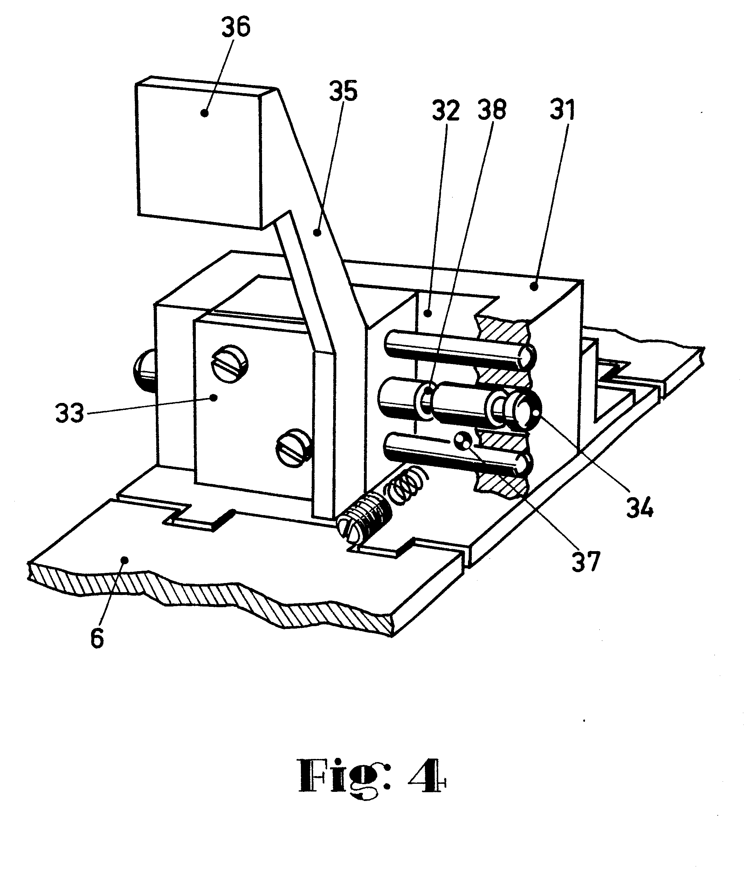

Die Halteeinrichtung besteht -wie aus Figur 4 zu entnehmen ist- aus einem U-förmigen Basiskörper 31, der mittels Schrauben am Band befestigt ist. In der Höhlung 32 des Basiskörpers 31 ist ein Schiebeglied 33 verschiebbar angeordnet, das in zwei Raststellungen bringbar ist. An dem Schiebeglied 33 befindet sich eine Schiebestange 34, die rechts oder links, je nach Raststellung, aus dem Basiskörper 31 herausragt. In der Schiebestange 34 sind auf beiden Seiten in dem Bereich, der sich im Basiskörper befindet, Aussparungen 38 vorgesehen, die mit federbelasteten Kugeln 37, die in eine Öffnung des Basiskörpers eingesetzt und dort verschiebbar sind, rastend zusammenwirken. Um den Fensterrahmen festhalten zu können, ist mit dem Schiebeglied ein Haltebügel 35 verbunden, der eine endseitige Abwinkelung 36 besitzt, die sich zur Einspannung um einen Teil des Fensterrahmens legt. Soll der Fensterrahmen eingespannt werden, so wird die Schiebestange von einer Seite aus in eine erste Raststellung geschoben. Die Freigabe erfolgt durch Verschieben der Schiebestange in die zweite Raststellung von der anderen Seite aus.

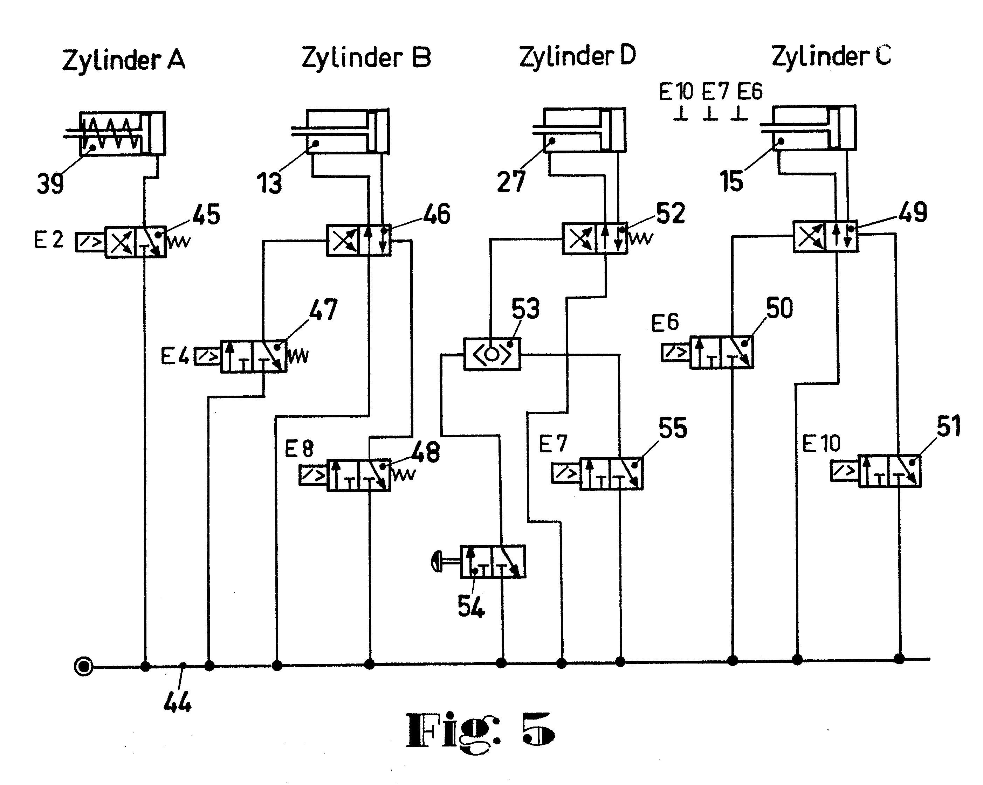

In Figur 5 ist der pneumatische Teil der Steuereinrichtung dargestellt. Die Erfindung ist jedoch auf pneumatische Antriebsmittel nicht beschränkt. Selbstverständlich wäre auch ein Ausführungsbeispiel denkbar, bei dem elektromagnetische, elektrische oder hydraulische Antriebsmittel eingesetzt sind. Insgesamt werden durch die pneumatische Steuerung vier Zylinder angesteuert. Diese vier Zylinder sind: die Zylinderkolbeneinheit A als Spannzylinder für die Halteeinrichtung; die Zylinderkolbeneinheit B für die erste Vorschubeinheit; die Zylinderkolbeneinheit C für die zweite Vorschubeinheit und die Zylinderkolbeneinheit D für die Schneideinrichtung. Mit Druckluft versorgt werden die Zylinder durch eine Hauptleitung 44. Mit dieser Hauptleitung 44 ist über ein 3/2-Wegeventil 45 die Zylinderkolbeneinheit A verbunden. Betätigt wird dieses Ventil durch einen Endschalter E2. Im Ruhezustand ist die Kolbenstange in der Stellung "ZURÜCK". Wird der Endschalter E2 betätigt, so schaltet das Wegeventil 45 um und es gelangt Druckluft auf den Zylinder. Demzufolge geht die Kolbenstange in die Stellung "VOR". Dabei wird die Schiebestange 34 eingedrückt, so daß der Fensterrahmen in der Halteeinrichtung eingespannt wird.

Der Vor- und Rücklauf der Zylinderkolbeneinheit B wird durch ein beidseitig pneumatisch betätigbares Hauptwegeventil 46 beeinflußt. Die eine Seite des Hauptwegeventils ist über ein Vorsteuerventil 47 mit der Hauptleitung 44 verbunden. Das Vorsteuerventil 47 ist ein 3/2-Wegeventil, das durch den Endschalter 4 betätigt wird. Auf der anderen Seite des Hauptwegeventils ist ein weiteres Vorsteuerventil 48 zwischengeschaltet, das ein 3/2-Wegeventil ist und das durch den Endschalter E9 betätigt wird. Soll die Kolbenstange des Zylinders von der Stellung "ZURÜCK" in die Stellung "VOR" übergehen, so muß der Endschalter E4 betätigt werden. Damit gelangt Druckluft zu dem Hauptwegeventil 46, das dadurch betätigt wird. Die durchgeschaltete Druckluft schiebt die Kolbenstange in die Stellung "VOR". Solange der Endschalter E4 eingeschaltet bleibt, solange befindet sich die Kolbenstange in dieser Stellung "VOR". Ist die gewünschte Stellung erreicht, so schaltet der Endschalter E4 ab und der Endschalter E8 wird betätigt, der das Vorsteuerventil 48 durchschaltet, so daß der Zylinder entlüftet wird und die Kolbenstange wieder zurückfährt.

Ähnlich ist der Vor- und Rücklauf der Zylinderkolbeneinheit C gesteuert. Es ist auch hier ein Hauptwegeventil 49 vorhanden, das beidseitig pneumatisch durch zwei Vorsteuerventile 50 und 51 betätigt wird. Die beiden Vorsteuerventile werden von zwei Endschaltern E6 und E10 geschaltet.

Die Zylinderkolbeneinheit D ist Bestandteil der Schneideinrichtung. Der Zylinder wird angesteuert von dem Hauptwegeventil 52. In der Ruhestellung befindet sich die Kolbenstange in der Stellung "ZURÜCK". Erst wenn ein Schneidvorgang erfolgen soll, wird die Kolbenstange und damit das Schneidmesser nach vorne geschoben. Nach dem Durchtrennen des Dichtungsstreifens kehrt die Kolbenstange sofort wieder in ihre Ruhestellung zurück. Das Hauptwegeventil 52 wird durch zwei Steuerventile 54 oder 55 betätigt, die über ein Wechselventil 53 mit dem Hauptwegeventil 52 verbunden sind. Das Steuerventil 54 wird von Hand bedient und zwar zu Beginn der Einfädelung des Dichtungsstreifens in den Führungskanal. Nach dem Einziehen des ersten Stückes des Dichtungsstreifens in die Nut erfolgt der Schneidvorgang automatisch über das durch den Endschalter E7 betätigte Steuerventil 55.

0110156

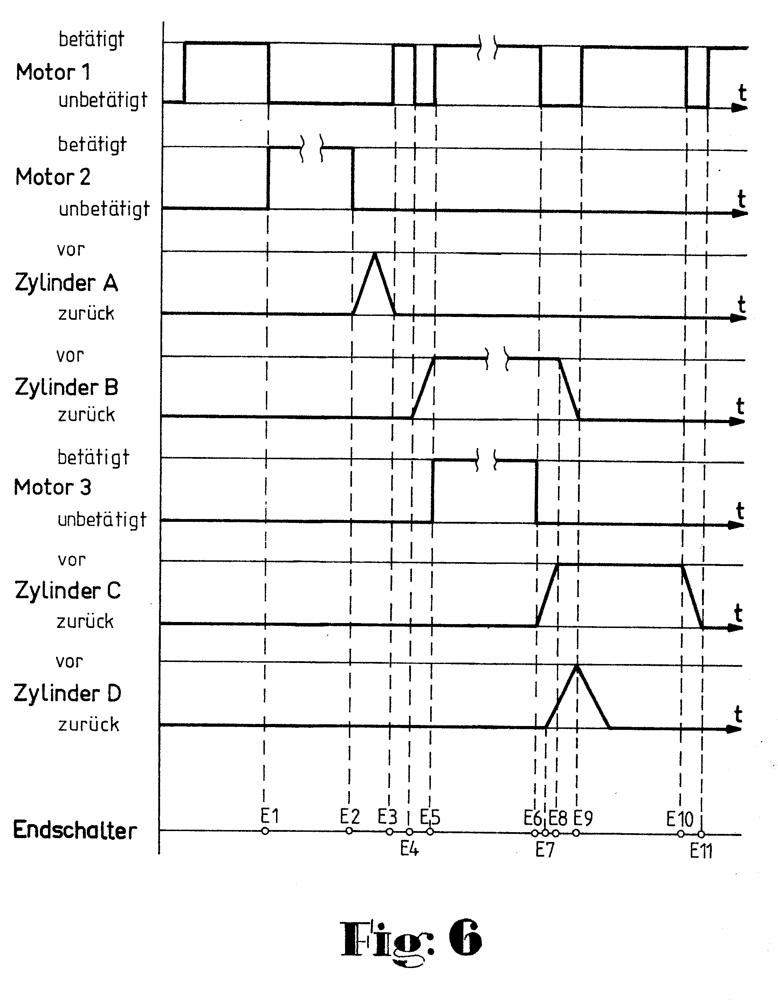

Anhand der Figur 6 soll nachfolgend ein Zyklus eines Einziehens eines Stückes eines Dichtungsstreifens in die Nut eines Fensterrahmens beschrieben werden. Es wird angenommen, daß bereits ein Schneidvorgang erfolgt ist. Die Zuordnung der Motoren zu den Gestellbaugruppen ist die, daß der Motor M1 das Band der Einzieheinrichtung bewegt, während der in den Figuren nicht dargestellte Motor M2 dem Band der Nachbareinrichtung zugeordnet ist. Der Motor M3 treibt die Eindrückeinrichtung an.

Zunächst wird die auf dem Band befestigte Halteeinrichtung durch Betätigung des Motors M1 in die richtige Position gebracht. Ist diese Position erreicht, so schaltet der Endschalter E1 den Motor M2 an, der den auf dem Band der Nachbareinrichtung befindlichen Fensterrahmen herantransportiert und zwar bis zu der Position, in der der Fensterrahmen von der Halteeinrichtung eingespannt werden kann. Dies kann nur mit dem Motor M2 geschehen, da sich die gesamte Einrichtung am Anfang des Bandes 6 befindet. Hat der Fensterrahmen seine Position erreicht, so schaltet der Endschalter E2 den Motor M2 ab und die Zylinderkolbeneinheit A an. Hierbei fährt die Kolbenstange vor und drückt die Schiebestange 34 in die Einspannraststellung. Nach dem Rücklauf der Kolbenstange schaltet der Endschalter E3 den Motor M1 an, so daß der Fensterrahmen in seine Anfangsstellung zum Einziehen gelangt. Wenn diese erreicht ist, wird über den Endschalter E4 die Zylinderkolbeneinheit B betätigt, indem sich die Kolbenstange nach vorne schiebt und der Anfang des Dichtungsstreifens von der Walze in die Nut eingedrückt werden kann. Sobald die Kolbenstange die Stellung "VOR" erreicht hat, wird durch einen Endschalter E5 der Motor M1 für das Band und der Motor M3 für die Walze und die Vorschubrollen eingeschaltet. Beide Geschwindigkeiten müssen selbstverständlich aufeinander abgestimmt sein. Der Dichtungsstreifen wird nun eingezogen und zwar bis kurz vor einem Punkt, an dem die erste Vorschubeinheit an den Fensterrahmen anstoßen würde. Dies meldet der Endschalter E6 und bewirkt ein Abschalten des Motors M1 und des Motors M3. Gleichzeitig schiebt sich die Kolbenstange der zweiten Vorschubeinheit nach vorne. Sobald die durch Endschalter E8 gemeldete Stellung erreicht ist, fährt die Kolbenstange der ersten Vorschubeinheit zurück. Jetzt übernimmt die drehbare Scheibe 23 anstelle der Walze das Eindrücken des Dichtungsstreifens für den Rest bis zum abgeschnittenen Ende. Die zeitliche Überlappung wurde deshalb gewählt, damit der Dichtungsstreifen immer unter Druck steht. Wenn die Kolbenstange der ersten Vorschubeinheit in Stellung "ZURÜCK" ist, läuft wieder aufgrund der Meldung des Endschalters E9 der Motor M1 an, wobei der Fensterrahmen folglich weitertransportiert wird. Der Motor M3 wird nicht benötigt, da das Einziehen des Reststückes des Dichtungsstreifens von der Scheibe übernommen wird. Ist auch das Ende des Dichtungsstreifens eingedrückt, so schaltet der Endschalter E10 den Motor M1 des Bandes ab und er veranlaßt den Rücklauf der Kolbenstange der zweiten Vorschubeinheit. Ist die Rücklaufstellung erreicht, so schaltet der Endschalter E11 den Motor M1 wieder ein und der Fensterrahmen wird weitertransportiert. Dabei läuft die vorstehende Schiebestange der Halteeinrichtung an einer ebenfalls vorstehenden Nase 56 vorbei, die sich an dem Gestellbaugruppenrahmen befindet. Diese Nase drückt die Schiebestange von der Einspannraststellung wieder in Freigaberaststellung, so daß der Fensterrahmen jetzt wieder frei ist und zur Nachbareinheit weitertransportiert werden kann. In dieser Nachbareinheit erfolgt z.B. die Drehung um 90 Grad und der Rücktransport. Bevor das Ende des Dichtungsstreifens in die Nut eingedrückt wird, erfolgt das Abschneiden, das durch den Endschalter E7 ausgelöst ist.

Bezugszeichen zu 16/82

| | |
|---|---|
| 1 Gestellbaugruppe | 36 Abwinkelung |
| 2 Gestellbaugruppenrahmen | 37 Kugel |
| 3 Fensterrahmen | 38 Aussparung |
| 4 Schaltschrank | 39 Zylinderkolbeneinheit A |
| 5 Vorratsrolle | 40 Drehwelle |
| 6 Umlaufendes, endloses Band | 41 Führungsstange für Zylinder-kolbeneinheit B |
| 7 Dichtungsstreifen | |
| 8 Nut im Fensterrahmen | 42 Kegelrad |
| 9 Ausleger | 43 Bügelfortsatz |
| 10 Tisch | 44 Hauptleitung |
| 11 Halteplatte | 45 Wegeventil |
| 12 Ständer | 46 Hauptwegeventil |
| 13 Zylinderkolbeneinheit B | 47 Vorsteuerventil |
| 14 Trägerplatte | 48 Vorsteuerventil |
| 15 Zylinderkolbeneinheit C | 49 Hauptwegeventil |
| 16 Bügel | 50 Vorsteuerventil |
| 17 Führungskanal | 51 Vorsteuerventil |
| 18 Einlauf | 52 Hauptwegeventil |
| 19 Vorschubrollen | 53 Wechselventil |
| 20 Leistenvorsprung | 54 Steuerventil |
| 21 Führungsrolle | 55 Steuerventil |
| 22 Walze | 56 Nase |
| 23 Scheibe | |
| 24 Zugmittel | M1 Motor |
| 25 Gestellbaugruppenunterteil | M2 Motor |
| 26 Zahnradgetriebe | M3 Motor |
| 27 Zylinderkolbeneinheit D | |
| 28 Schneidmesser | E1 Endschalter    E9  Endschalter |
| 29 Führungsblock | E2 Endschalter    E10 Endschalter |
| 30 Schneidplatte | E3 Endschalter    E11 Endschalter |
| 31 Basiskörper | E4 Endschalter |
| 32 Höhlung | E5 Endschalter |
| 33 Schiebeglied | E6 Endschalter |
| 34 Schiebestange | E7 Endschalter |
| 35 Haltebügel | E8 Enschalter |

0110156

P r e h
Industrieausrüstungen GmbH
Schweinfurter Straße 5
8740 Bad Neustadt/Saale

, den 10.11.1982

Bsch/Hi
16/82 Pt.+Hgm

Einrichtung zum automatischen
Einziehen eines Dichtungsstreifens
in eine Nut eines Rahmens

1. Einrichtung zum automatischen Einziehen eines Dichtungsstreifens in eine Nut eines Rahmens, dadurch gekennzeichnet,
   - daß eine Vorratsrolle (5) vorhanden ist, um die der Dichtungsstreifen (7) gewickelt ist,
   - daß eine Transporteinrichtung vorgesehen ist, durch die der Dichtungsstreifen (7) von der Vorratsrolle (5) zur langgestreckten Nut (8) mitnehmend geführt ist,
   - daß innerhalb der Transporteinrichtung eine Schneideinrichtung vorhanden ist, mit deren Hilfe der Dichtungsstreifen (7) in Stücke mit einer gewünschten Länge zuschneidbar ist,
   - daß eine Eindrückeinrichtung vorgesehen ist, die das Dichtungsstreifenstück in die langgestreckte Nut (8) eindrückt, und
   - daß ein Förderantrieb (M1, 6) vorhanden ist, der die Eindrückeinrichtung und den mit der langgestreckten Nut (8) versehenen Rahmen (3) relativ zueinander bewegt.

2. Einrichtung nach Anspruch 1, dadurch gekennzeichnet, daß Vorratsrolle (5), Transporteinrichtung, Schneideinrichtung, Eindrückeinrichtung und Förderantrieb an einer Gestellbaugruppe (1) angebracht sind, die im wesentlichen aus einem Gestellbaugruppenunterteil (25) und einem Gestellbaugruppenrahmen (2) besteht.

3. Einrichtung nach Anspruch 2, dadurch gekennzeichnet, daß mit dem Gestellbaugruppenrahmen (2) über seitliche Ausleger (9) ein Tisch (10) verbunden ist, an dem senkrecht dazu eine Halteplatte (11) befestigt ist.

4. Einrichtung nach Anspruch 3,
   dadurch gekennzeichnet,
   daß die Vorratsrolle (5) mit Hilfe eines Ständers (12) am Tisch (10)
   angebracht ist oder daß der Ständer direkt am Boden steht.

5. Einrichtung nach Anspruch 3,
   dadurch gekennzeichnet,
   daß an der Halteplatte (11) eine erste und eine zweite Vorschubeinheit befestigt sind.

6. Einrichtung nach Anspruch 5,
   dadurch gekennzeichnet,
   daß die erste Vorschubeinheit aus einer pneumatischen Zylinderkolbeneinheit (13) besteht, an derem Kolbenstangenende sich eine durch zwei
   Führungsstangen geführte bewegbare Trägerplatte (14) befindet und daß
   die zweite Vorschubeinheit aus einer weiteren pneumatischen Zylinderkolbeneinheit (15) besteht, an derem Kolbenstangenende sich ein durch
   zwei Führungsstangen geführter, senkrecht zur Verschieberichtung erstreckender Bügel (16) befindet, an dessem freien oberen Ende ein Endschalter angeordnet ist.

7. Einrichtung nach Anspruch 5,
   dadurch gekennzeichnet,
   daß sich die Transporteinrichtung an der Trägerplatte (14) der ersten
   Vorschubeinheit befindet.

8. Einrichtung nach Anspruch 7,
   dadurch gekennzeichnet,
   daß die Transporteinrichtung aus einem mit einem Einlauf (18) versehenen
   Führungskanal (17) in der Trägerplatte (14), aus mindestens einem Paar
   von an der Trägerplatte (14) gegensinnig rotierend gelagerten und umfangseitig mit einem Zahnkranz versehenen Vorschubrollen (19) und an
   der Trägerplatte (14) vorhandenen Umlenkmitteln besteht, durch die das
   Dichtungsstreifenstück von der vertikalen Führung in die horizontale
   Lage überführt wird.

0110156

9. Einrichtung nach Anspruch 8,
dadurch gekennzeichnet,
daß die Umlenkmittel mehrere parallel und bogenförmig angeordnete
Führungsrollen sind.

10. Einrichtung nach Anspruch 8,
dadurch gekennzeichnet,
daß die Umlenkmittel aus einem bogenförmigen Leistenvorsprung (20)
der Trägerplatte (14) und mindestens einer davon beabstandeten
Führungsrolle (21) bestehen.

11. Einrichtung nach einem der Ansprüche 1 bis 10,
dadurch gekennzeichnet,
daß die Eindrückeinrichtung aus einer mit einem umlaufenden Zahnkranz
versehenen Walze (22) besteht, die sich an der ersten Vorschubeinheit
befindet und deren Drehachse zur Ebene der Trägerplatte (14) so beabstandet ist, daß die Zähne der Walze (22) den Dichtungsstreifen (7)
aus der Ebene der Trägerplatte (14) heraus ablenken und in die langgestreckte Nut (8) eindrücken, und daß die Eindrückeinrichtung ferner
aus einer am unteren Ende des Bügels (16) der zweiten Vorschubeinrichtung befindlichen, vorstehenden drehbaren Scheibe (23) besteht.

12. Einrichtung nach einem der Ansprüche 1 bis 11,
dadurch gekennzeichnet,
daß der einzige, an der Trägerplatte (14) angeordnete Antrieb für die
Vorschubrollen (19) und für die Walze (22) aus einem von einem Motor
angetriebenen kombinierten Zugmittel (24) und Zahnradgetriebe (26)
besteht.

13. Einrichtung nach einem der Ansprüche 1 bis 12,
dadurch gekennzeichnet,
daß die Schneideinrichtung eine pneumatische Zylinderkolbeneinheit
(27), ein mit der Kolbenstange verbundenes Schneidmesser (28), einen
an der Trägerplatte (14) befestigten Führungsblock (29) für das Schneidmesser (28) und eine in die Trägerplatte (14) eingesetzte Schneidplatte
(30) umfaßt.

0110156

14. Einrichtung nach Anspruch 13,
dadurch gekennzeichnet,
daß das Schneidmesser (28) V-förmig ausgebildet ist.

15. Einrichtung nach einem der Ansprüche 1 bis 14,
dadurch gekennzeichnet,
daß der Rahmen (3) durch eine Halteeinrichtung am Förderantrieb
festgehalten wird.

16. Einrichtung nach Anspruch 15,
dadurch gekennzeichnet,
daß die Halteeinrichtung aus einem am Förderantrieb befestigten,
U-förmigen Basiskörper (31) besteht, in dessen Höhlung (32) quer
zur Bewegungsrichtung des Förderantriebes ein durch Rastmittel in
zwei Stellungen bringbares Schiebeglied (33) durch eine auf beiden
Seiten aus dem Basiskörper (31) herausragende Schiebestange (34)
verschiebbar gelagert ist, wobei sich am Schiebeglied (33) ein
Haltebügel (35) mit einer endseitigen Abwinkelung (36) zur Festhaltung des Rahmens (3) befindet.

17. Einrichtung nach Anspruch 16,
dadurch gekennzeichnet,
daß die Rastmittel aus federbelasteten Kugeln (37) bestehen, die
mit Aussparungen (38) in der Schiebestange (34) rastend zusammenwirken.

0110156

**Fig. 1**

Fig. 2

**Fig: 3**

3/6

0110156

**Fig: 4**

Fig. 5

**Fig. 6**

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. ³) |
|---|---|---|---|
| X | DE-A-2 915 282 (STEGHERR) <br> * Seiten 4-7; Figuren 1,2 * | 1 | E 04 F 21/00 |
| X | DE-A-1 509 878 (THE SCHLEGEL MANUFACTURING COMPANY) <br> * Ansprüche; Figuren 1-7 * | 1 | |
| A | US-A-3 007 240 (HEINRICH) <br> * Spalte 2, Zeilen 60-64; Figuren 1,2 * | 11 | |
| A | DE-A-2 512 121 (ELBATAINER KUNSTSTOFF- UND VERPACKUNGSGESELLSCHAFT) <br> * Seiten 4,5; Figuren 1-4 * | 14 | |
| A | FR-A-2 058 707 (BOIVIN) <br> * Seiten 1,2 * | 2 | **RECHERCHIERTE SACHGEBIETE (Int. Cl. ³)** <br> E 04 F <br> B 27 B |

Der vorliegende Recherchenbericht wurde für alle Patentansprüche erstellt.

| Recherchenort | Abschlußdatum der Recherche | Prüfer |
|---|---|---|
| DEN HAAG | 20-02-1984 | VIJVERMAN W.C. |